# EUROPEAN PATENT APPLICATION

(11) **EP 0 602 867 A1**
(43) Date of publication of application: **22.06.1994**
(21) Application number: 93309785.9
(22) Date of filing: 06.12.1993
(51) Int. Cl.: G06F 12/14

(54) **An apparatus for securing a system platform**

(30) Priority: 17.12.1992 US 992208
(71) Applicant: NCR International, Inc., Dayton, Ohio 45479 (US)
(72) Inventor: Protheroe, Robert Llewellyn, Lawrenceville, Georgia 30243 (US); Keys, John Baird, Duluth, Georgia 30136 (US)
(74) Representative: Robinson, Robert George

(57) **Abstract**

An apparatus (10,30) for securing a system platform which monitors unauthorized attempts at accessing a secure memory portion (20) within the system. The system includes a single microcontroller (12), a memory means (16) coupled to the microcontroller for storing information, a partition register (24) for partitioning the memory means into a secured address portion (20) and non-secured address portion (22), and a controlling means including the microcontroller (12) and a platform security monitor (14) for controlling access to the secured and non-secured address portions. The system may additionally include a circuit (80,81) for recognizing and logging unauthorized attempts at accessing the secure memory portion.

## Description

The present invention relates to an apparatus for securing a system platform.

In particular the present invention relates to circuitry for controlling access to programming and data within a computerized system, and more specifically to an apparatus for securing a system platform.

Secure system platforms are necessary in some environments, and especially in retail environments to prevent theft. A secure system platform is one in which an application program cannot access or modify data, the operating system, encryption codes, or other secure functions which reside in the secured system platform. It should be understood that a system platform is a portion or level of system memory and a secure system platform is a portion or level of system memory which may not be accessed without authorization.

Present secured system platforms are secured through the use of two microcontrollers, one for maintaining the secured environment, and another for running application programs. This approach is very costly.

It is an object of the present invention to provide an apparatus for securing a system platform which is of simplified construction.

According to the present invention there is provided an apparatus for securing a system platform, the apparatus comprising: a single microcontroller which is capable of running application programs; a memory means coupled to the microcontroller for storing information; partitioning means for partitioning the memory into a secured address portion and a non-secured address portion; and controlling means, including the microcontroller, coupled to the partitioning means for controlling access to the secured address portion of the memory means.

The system may additionally include a circuit for logging unauthorized attempts at accessing the secure memory portion.

Preferably the platform security monitor includes a first circuit coupled to the partition register for determining which address portion the microcontroller attempts to access; a second circuit coupled to the first circuit for detecting signals from the microcontroller attempting to read, write, or fetch information from the secure address portion; a third circuit for decoding a predetermined sequence of write signals from the microcontroller; a fourth circuit coupled to the outputs of the first, second, and third circuits for generating a blocking signal when the microcontroller attempts to read, write, or fetch information from the secure address portion and when the microcontroller generates a sequence of write signals different from the predetermined sequence of write signals; and a fifth circuit for blocking enable signals from the microcontroller to the memory in response to the blocking signal.

Embodiments of the present invention will now be described, by way of example, with reference to the accompanying drawings, in which:-
Figure. 1 is a block diagram of a first embodiment of the system in accordance with the present invention;
Figure. 2 is a block diagram of a second embodiment of a system in accordance with of the present invention;
Figure. 3 is a schematic diagram of a platform security monitor in accordance with the present invention;
Figure. 4 is a flow diagram of a method of securing a system platform in accordance with the present invention; and
Figure. 5 is a flow diagram of a method of recognizing unauthorized access attempts in accordance with the present invention.

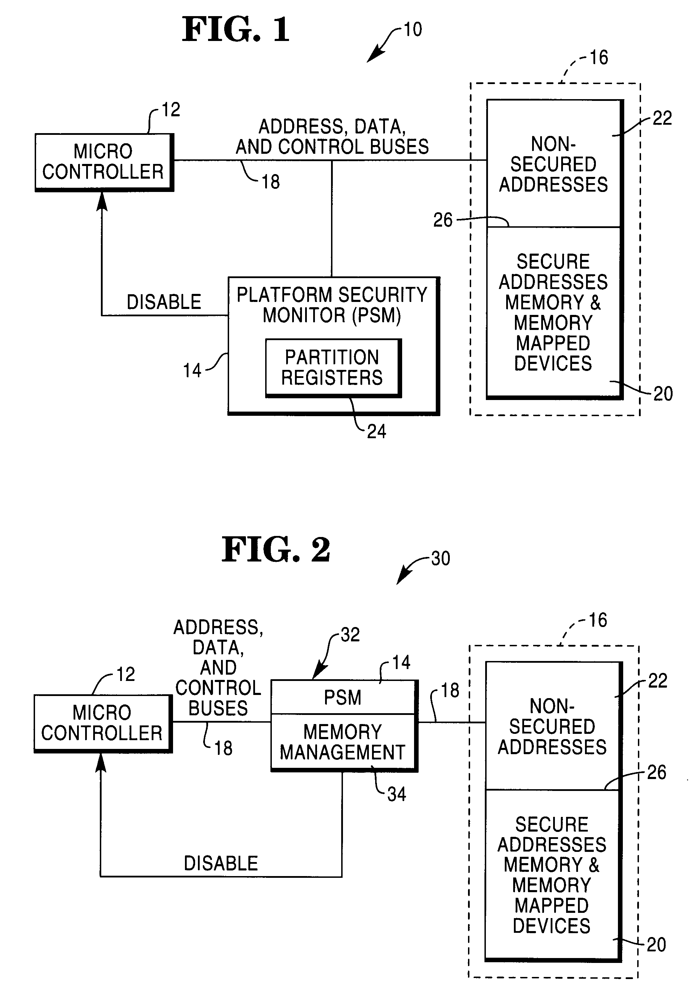

Referring now to Figure. 1, secure microcontroller-based system 10 includes microcontroller 12, platform security monitor (PSM) 14, and memory 16. Microcontroller 12 is coupled to memory 16 through address, data, and control bus 18.

Memory 16 is partitioned into secure address partition 20 and non-secure address partition 22. Secure memory partition 20 includes memory-mapped device memory.

PSM 14 includes partition registers 24 which store information about the partition address 26 between secure and non-secure address partitions 20 and 22. PSM 14 continually monitors bus 18 and compares the addresses with partition registers 24 to determine whether microcontroller 12 is accessing secure or non-secure addresses. The purpose of PSM 14 is to assure that microcontroller 12 only reads or writes to secure addresses when operating within the secure address partition 20. Thus, system 10 cannot be misused by any application running on system 10.

Turning now to Figure. 2, another embodiment 30 of the system of the present invention is shown. PSM 14 is shown as residing on the same chip 32 as memory management circuit 34, which makes more memory 16 available through mapping methods well known in the art. PSM 14 and memory manager circuit 34 physically separate microcontroller 12 from memory 16 and any memory mapped devices. Thus, removal of chip 32 renders system 30 inoperable.

In both Figures. 1 and 2, memory 16 is divided into two memory partitions for purposes of example and simplicity. However, the present invention envisions a memory divided into any number of partitions by simply storing several partition addresses in several partition registers.

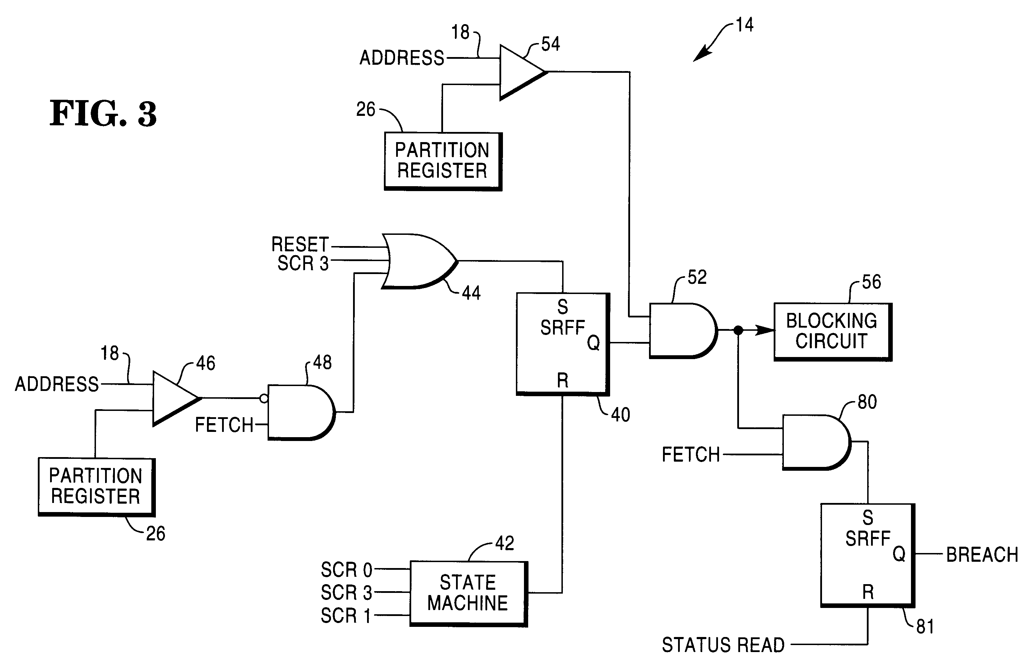

Turning now to Figure. 3, PSM 14 of Figure. 1 is shown in more detail. PSM 14 includes security flip-flop 40 that holds PSM 14 in either a locked or unlocked mode of operation. Flip-flop 40 receives inputs from state machine 42 and OR gate 44. State machine 42 receives write signals "SCR0", SCR3", and "SCR1", from microcontroller 12 and produces an "unlock" signal when three consecutive write cycles occur.

OR gate 44 is part of a circuit including comparator 46 and AND gate 48. Comparator 46 compares addresses from bus 18 with partition address information in partition register 26. The output signal from comparator 46 is fed to the inverting input of AND gate 48, which also receives a "fetch" (memory read) signal input. The output signal from AND gate 48 is fed to OR gate 44, which also receives a "reset" signal and a write signal "SCR3" from microcontroller 12.

PSM 14 is unlocked when microcontroller 12 sends out three write signals (SCR0, SCR3, SCR1) to three predetermined non-sequential addresses without any intervening read, write, or fetch bus cycles. The unlock signal from state machine 42 changes the output of flip-flop 40 to the unlocked mode. One skilled in the art could make several state machines (or even another form of circuit) that could produce a secure unlock signal without departing from the scope of the present invention.

Flip-flop 40 produces an output signal indicating locked or unlocked mode which is fed to AND gate 52, which also receives an input signal from comparator 54. Like comparator 46, comparator 54 monitors address bus 18 and compares addresses from bus 18 with partition address information in partition register 26. Two comparators, 46 and 54, having the same function, are employed by the circuit in Figure. 3. However, it is understood that one comparator may be used for economy. The output signal from AND gate 52 is fed to blocking circuit 56 and to AND gate 80.

In operation, when microcontroller 12 is operating in non-secure partition 22, PSM 14 is in a locked mode. PSM 14 monitors address bus 18 and any attempt to read, write, or fetch an instruction from an address in secure partition 20 triggers PSM 14 to block the enabling signal to memory 16.

When operating in the locked mode, comparator 54 compares the address from address bus 18 with the partition information in partition registers 26. If the address is within secure partition 20, microcontroller 12 is trying to access secure addresses. Comparator 54 sends a signal to AND gate 52, which combines with the "locked mode" signal from flip-flop 40 to satisfy the "AND" condition of AND gate 52. AND gate 52 then sends a signal to blocking circuit 56, which blocks the microcontroller cycle by sending a signal that blocks the memory enabling signals. Since all memory accesses are disabled, microcontroller 12 cannot read, write, or fetch instructions from memory 16.

AND gate 52 also sends a signal to AND gate 80 which combines with the fetch signal to satisfy the AND condition of AND gate 80. The output of AND gate 80 provides a "set" signal to SR flip-flop 81. When flip-flop 81 is set, a security breach has occurred as microcontroller 12 has tried to fetch an instruction from a secure address while in the locked mode. The state of flip-flop 81 may be read by microcontroller 12 through various methods known in the art for accessing a status port. The reading of the status port will reset flip-flop 81.

When PSM 14 is in the locked mode, any attempt to execute an instruction in the secure partition 20 triggers PSM 14 to reset or otherwise disable microcontroller 12. Therefore, PSM 14 does not allow any modifications or reading of data or instructions stored at secure addresses, and does not permit the application, which operates in non-secure partition 22, to pass control to any instruction set stored at a secure address by simply fetching secure instructions.

Various methods known in the art may be used to reset or disable microcontroller 12. For example, microcontrollers which have internal data bus pullups, and which reset when an instruction containing all binary ones is received, are resetable by disabling the chip enable of the memory chips employed. Alternatively, a reset instruction may be forced onto the microcontroller bus. Some microcontrollers can be disabled by triggering the reset input on the microcontroller.

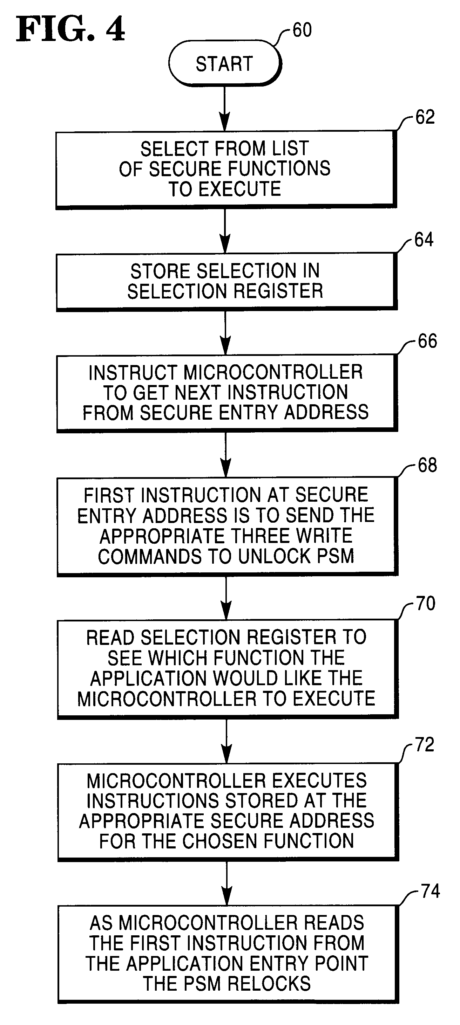

The application can invoke certain secure functions by following the sequence in the flowchart shown in Figure. 4, which illustrates the operation of system 10, beginning with START 60.

In block 62, an application selects which secure function it wishes to invoke from the list of permissible functions.

To run the secure function the application writes the appropriate selection key to a selection register in block 64.

In block 66, the application passes control to a pre-designated secure entry address internal to microcontroller 12 where a secured access routine resides.

In block 68, microcontroller 12 executes the first set of instructions of the secured access routine, which are instructions to unlock PSM 14 so that microcontroller 12 can access secure addresses. PSM 14 is unlocked when the microcontroller sends out write signals SCR0, SCR3, SCR1 to three predetermined non-sequential addresses without any intervening read, write, or fetch bus cycles.

Only internal memory instructions can perform such a sequence of write commands because memory fetch cycles will not appear on external bus 18. Therefore, the unlocking sequence does not have to be secret because an application can not possibly duplicate it without an intervening fetch on bus 18.

After unlocking PSM 14, the secured access routine instructions reads the selection key from the selection register and executes the appropriate secure function in blocks 70 and 72. Microcontroller 12 has access to all secure addresses at this time, which is acceptable because microcontroller 12 is executing secure instructions that are stored entirely within secure partition 20.

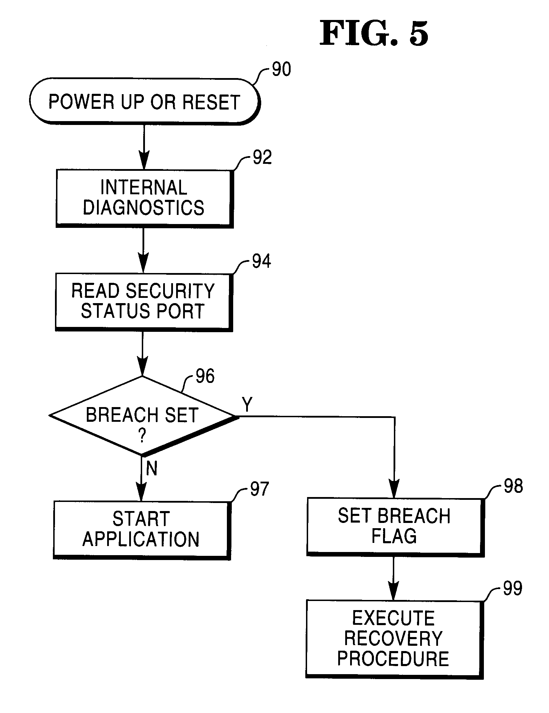

Figure. 5 illustrates a possible method of monitoring unauthorized attempts at accessing secure partition 20, beginning at START 91. In block 90, microcontroller 12 is initialized by a reset or power-on condition.

In block 92, microcontroller 12 performs internal diagnostics to verify normal operation.

Before starting an application, microcontroller 12 reads the security status port to determine the status of flip-flop 81 in block 94.

In block 96, the breach bit is tested to determine if an unauthorized access attempt has occurred. If an unauthorized access attempt has occurred, the breach flag is set in block 98 and the recovery procedure is executed in block 99. The recovery procedure may include logging instances when the breach flag is set, and clearing the breach flag.

If an unauthorized access attempt has not occurred, then the application is started.

Unlocked PSM 14 sits poised to return to the locked mode if microcontroller 12 resets, sends out write signal SCR3, or attempts to fetch an instruction from a non-secure address. Comparator 46 continually monitors bus 18 for any attempt to access non-secure memory partition 22 by comparing the address with the partition information in partition registers 26. If the address is within secure partition 20, then comparator 46 sends a signal to the inverting input of AND gate 48. AND gate 48 combines the signal that a non-secure address has been addressed and a signal that indicates that microcontroller 12 is fetching an instruction. When the AND condition is met, AND gate 48 sends a "lock" signal to OR GATE 44. OR GATE 44 generates a "lock" signal to set flip-flop 40 if it receives a reset signal, write signal SCR3, or a "lock" signal from AND gate 30.

When microcontroller 12 finishes executing the secure instructions it will pass control back to instructions in non-secure partition 22 in block 74. This first fetch instruction to an application address causes PSM 14 to immediately go back to a locked mode so that no application instruction can ever modify secure memory partition 20 or execute secure functions directly. The present invention envisions modifications to the conditions that cause flip-flop 40 to set.

In view of the foregoing it will be clear to a person skilled in the art that modifications may be incorporated without departing from the scope of the present inventions.

## Claims

1. An apparatus for securing a system platform, the apparatus comprising: a single microcontroller (12) which is capable of running application programs; a memory means (16) coupled to the microcontroller for storing information; partitioning means (24,26) for partitioning the memory into a secured address portion (20) and a non-secured address portion (22); and controlling means (12,14), including the microcontroller, coupled to the partitioning means for controlling access to the secured address portion of the memory means.

2. An apparatus as claimed in claim 1, further comprising: recognition means (80,81) for recognizing unauthorized attempts at accessing the secure address portion of the memory means.

3. An apparatus as claimed in claim 1, or claim 2 characterized in that the partitioning means comprises: a partition register (24).

4. An apparatus as claimed in any of claims 1 to 3, characterized in that the controlling means comprises: first circuit means (46,54) coupled to the partitioning means for determining which address portion the microcontroller attempts to access; second circuit means (44,48) coupled to the first circuit means for detecting signals fro the microcontroller attempting to read, write, or retch information from the secure address portion; third circuit means (42) for decoding a predetermined sequence of write signals from the microcontroller; fourth circuit means (40) coupled to the outputs of the first, second, and third circuit means for generating a blocking signal when the microcontroller attempts to read, write, or fetch information from the secure address portion and when the microcontroller attempts to read, write, or fetch information from the secure address portion and when the microcontroller generates a sequence of write signals different from the predetermined sequence of write signals; and fifth circuit means (56) for blocking enable signals from the microcontroller to the memory in response to the blocking signal from the fourth circuit means.

5. An apparatus as claimed in claim 4, characterized in that the first circuit means comprises: a comparator (46,54).

6. An apparatus as claimed in claim 4 or claim 5, characterized in that the second circuit means comprises: an AND gate (48) having an input from the first circuit means and a fetch input from the microcontroller; and an OR gate (44) having an input from the AND gate, a write signal input from the microcontroller, and a reset input from the microcontroller.

7. An apparatus as claimed in any of claims 4 to 6, characterized in that the third circuit means comprises: a state machine (42).

8. An apparatus as claimed in any of claims 4 to 7, characterized in that the fourth circuit means comprises an RS-type flip-flop (40) having inputs from the second and third circuit means; and an AND gate (52) having inputs from the RS-type flip-flop and the first circuit means (54).

9. An apparatus as claimed in claim 2, characterized in that the recognition means comprises an AND gate (80) having fetch and blocking circuit enable inputs and an output; and an SR-type flip-flop (81) coupled to the output of the AND gate (80), the And gate having a status read input and a breach signal output.
